# DEMANDE DE BREVET EUROPEEN

(11) **EP 1 577 191 A2**
(43) Date de publication de la demande: **21.09.2005**
(21) Numéro de dépôt: 05300155.8
(22) Date de dépôt: 01.03.2005
(51) Int. Cl.: B62D 1/04

(54) **Dispositif de commande au volant ou sous le volant pour véhicule automobile, du type comportant un pavé tactile.**

(30) Priorité: 16.03.2004 FR 0402693
(71) Demandeur: Renault s.a.s., 92100 Boulogne Billancourt (FR)
(72) Inventeur: Besse, Patrick, 92100, Boulogne (FR)

(57) **Abrégé**

Ce dispositif de commande sous le volant (3) d'un véhicule automobile un pavé tactile (20) est caractérisé par un pavé tactile dont la surface sensible est disposée sur la face arrière (13) d'un satellite (5) de commande sous volant, sensiblement derrière la jante (6) du volant (3). La surface sensible apparente comprend deux lumières (21, 22) formant une croix, dont au moins l'une des branches à des bords crénelés donnant à l'utilisateur l'illusion d'une molette.

## Description

La présente invention concerne un dispositif de commande au volant ou sous le volant pour véhicule automobile pour au moins une fonction donnée, du type comportant un pavé tactile. Ces dispositifs de commande, souvent appelés de leur nom anglais « touch pad », consistent en surfaces ou pavés tactiles ou blocs à effleurement, et notamment les pavés tactiles de pointage, c'est-à-dire en petites surfaces sensibles de pointage sur lesquelles on déplace le doigt pour entrer des commandes, la position du doigt étant prise en compte par le pavé, en général au moyen d'un « clic », et non sa seule présence comme dans le cas des interrupteurs à effleurement.

L'utilisation de ces pavés tactiles s'est développée notamment dans l'équipement informatique et l'équipement automobile. Ils ont entre autres l'avantage d'un faible encombrement et de n'avoir pas de parties mobiles.

On sait déjà associer de tels pavés tactiles au volant de direction d'un véhicule automobile, dans le but de rassembler dans un espace restreint et aisément accessible au conducteur un certain nombre de commandes. Par exemple, les documents EP 0612292, DE 20020227, WO 9713657 montrent un bloc tactile disposé à un endroit bien visible de la partie avant d'un volant, éventuellement sur un volet pivotant comme dans le document DE 4328654. Selon les documents GB 2256916 et JP 2001039317, le pavé tactile comprend plusieurs surfaces rassemblées sur un élément-poignée indépendant qu'on vient accrocher au volant.

Il est par ailleurs connu de disposer divers organes de commande derrière le volant, notamment sur des bras radiaux fixes ou articulés implantés sur la colonne de direction ou la coquille qui l'entoure. Il s'agit souvent d'organes de commande de type classique, sous forme d'interrupteurs, de boutons, de molettes, de tirettes, de leviers, destinés par exemple à la commande des indicateurs de direction ou aux commandes d'essuie-glace, comme dans le cas du document FR 2 813 247 ou FR 2 829 071 au nom de la Demanderesse. Il peut aussi s'agir de modules de commande sous volant, souvent appelés satellites, destinés à la commande des équipements multimédias du véhicule et/ou d'aide à la navigation, et généralement associés à un écran déporté. De tels satellites peuvent prévoir une ou des surfaces tactiles, comme par exemple dans le document EP 0 813 989 au nom de la Demanderesse, encore que ce document semble préférer une surface tactile sur le volant.. Par ailleurs, le document US 4 131 772 fait aussi connaître un module radial sous volant, sur lequel sont prévus des interrupteurs à effleurement, c'est-à-dire qui fonctionnent en tout ou rien, et qui sont disposés sur la face avant, la face ou la tranche supérieure et la face ou la tranche latérale.

Le but de l'invention est d'élargir les possibilités d'utilisation des pavés tactiles.

L'invention atteint son but grâce à un dispositif de commande au volant ou sous le volant pour véhicule automobile pour au moins une fonction donnée, du type comportant un pavé tactile, caractérisé en ce que la surface sensible du pavé tactile est tournée à l'opposé du volant. Le pavé tactile, notamment un pavé tactile de pointage, est donc disposé sur le volant lui-même ou sur un organe annexe derrière le volant, de manière que sa surface sensible soit tournée vers l'avant du véhicule, à l'opposé du volant. Il convient de le disposer dans un endroit facilement accessible au conducteur, sans distraction. De façon préférée, le pavé est disposé sur la face arrière d'un satellite de commande sous volant, et sa surface sensible est sensiblement derrière la jante du volant, par exemple sensiblement au niveau d'un diamètre horizontal du volant. Le satellite peut comporter d'autres actionneurs à d'autres emplacements.

Compte tenu du fait que le pavé est accessible à l'aveugle, il est avantageux que sa forme, notamment au niveau de sa surface sensible, soit aisément reconnaissable par le doigt pour effectuer le ou les déplacements nécessaires à la commande ou aux commandes. Il est préférable que le pavé soit « à fonction dédiée », c'est-à-dire ne soit utilisé que pour les commandes d'un seule fonction, afin d'éviter les complications et les confusions.

La forme de la surface sensible apparente (le pavé peut s'étendre plus ou moins sous un cache définissant la surface apparente) peut par exemple être celle d'une lumière allongée, dont les bords peuvent avantageusement être crénelés ce qui donne à l'utilisateur qui la parcourt du doigt l'illusion d'une molette.

La surface peut avantageusement comprendre deux lumières formant une croix, ce qui est aisément discernable sous le doigt. Cette forme permet d'assurer aisément une commande de déplacement vertical et un déplacement horizontal. Un bras de la croix, ou de préférence une branche complète de la croix peut être crénelée sur ses bords.

D'autres caractéristiques et avantages de l'invention ressortiront de la description suivante d'un exemple de réalisation, en référence aux dessins annexés sur lesquels :

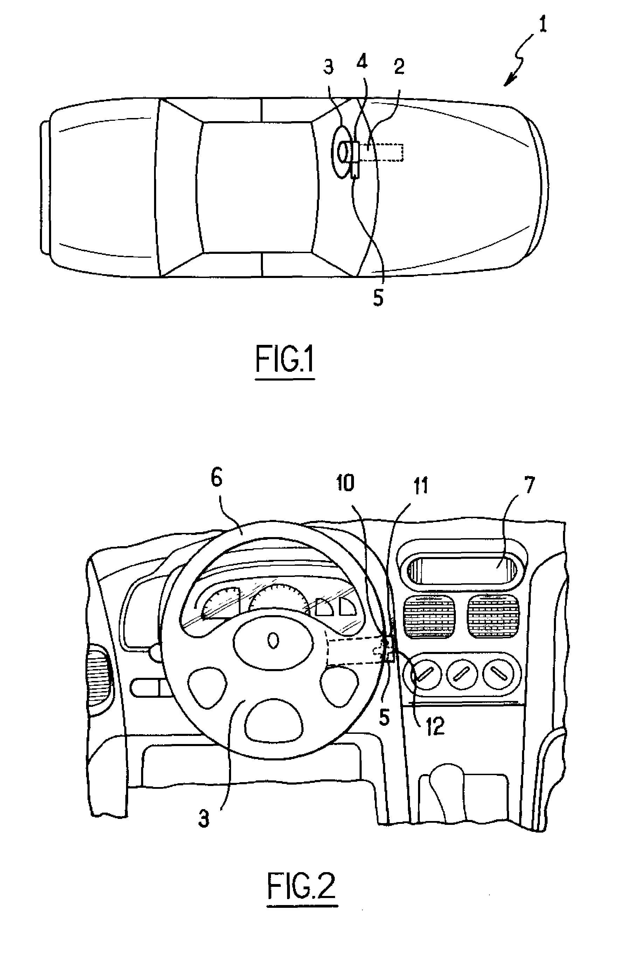

La figure 1 est une vue schématique de dessus d'un véhicule de tourisme montrant l'implantation du dispositif de l'invention,
La figure 2 est une vue partielle en perspective avant d'un volant de direction et de son satellite de commande sous volant équipé, à l'arrière, d'un pavé tactile, et

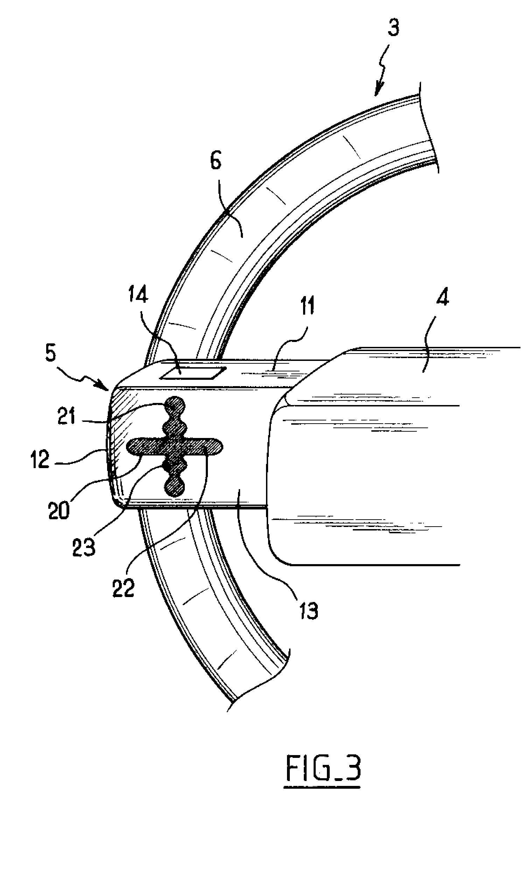

La figure 3 est une vue partielle en perspective arrière de détail d'un satellite sous volant de direction, équipé d'un pavé tactile conforme à l'invention.

Le véhicule 1 comprend une colonne de direction 2 actionnée par un volant de direction 3 à jante périphérique 6. Derrière le volant, un boîtier radial dit satellite 5 est implanté sur la coquille 4 sous volant, pour recevoir divers organes de commande et de manoeuvre d'accessoires du véhicule, et notamment, par exemple, de moyens multimédias associés à un écran déporté 7.

Le satellite peut avoir une forme sensiblement parallélépipédique, avec notamment une face avant 10, une face supérieure 11, une face d'extrémité 12, et une face arrière 13. Les faces autres que la face arrière 13 peuvent recevoir de manière classique divers organes de commande ou de manoeuvre, comme par exemple la surface tactile 14 montrée sur la surface supérieure 11.

Selon l'invention, la face arrière 13 du satellite 5 reçoit un pavé tactile 20 disposé sensiblement derrière la jante 6 du volant, sensiblement dans la région d'un plan diamétral horizontal du volant, de façon que la surface sensible du pavé tactile soit facilement accessible à un doigt du conducteur au volant.

Le pavé est représenté ici sous forme d'une surface apparente cruciforme composée d'une lumière allongée verticalement 21 et d'une lumière allongée horizontalement 22 formant les quatre bras d'une croix centrée sur l'intersection 23. Les bords verticaux de la lumière verticale 21 sont crantés ou crénelés de manière que lorsque le doigt du conducteur les parcourt, il éprouve la sensation d'une molette, ce qui lui permet d'effectuer par exemple un réglage du défilement vertical de l'image ou du pointeur sur l'écran 7, d'une manière qu'il peut assimiler à celle d'une molette. Les bords de la lumière horizontale 22 peuvent êtres crénelés aussi, ou rester lisses, notamment si l'action commandée par la lumière horizontale est de type simple ne nécessitant pas de précision (par exemple saut de colonne à gauche ou à droite sur l'écran 7).

Les bords des lumières 21, 22 sont avantageusement formés par les bords découpés d'une paroi de protection laissant apparaître la surface sensible utile du pavé tactile. L'épaisseur de la paroi, la largeur des lumières sont choisis de manière à permettre à un doigt moyen d'utilisateur de suivre à volonté les lumières en glissant et, le cas échéant, d'appuyer en un point ou un autre (par exemple sur l'intersection 23) pour « cliquer ».

Du fait que le satellite 5 peut ne comporter que des pavés tactiles, son épaisseur peut être maintenue très faible, et donc son encombrement être très réduit dans une zone où peuvent être situées de nombreuses autres commandes non représentées, comme par exemple des commandes classiques par leviers pour les essuie-glaces ou les indicateurs de direction.

## Revendications

1. Dispositif de commande au volant (3) ou sous le volant pour véhicule automobile (1) pour au moins une fonction donnée, du type comportant un pavé tactile (20), à effleurement, sans parties mobiles, **caractérisé en ce que** la surface sensible du pavé tactile est tournée à l'opposé du volant (3).

2. Dispositif selon la revendication 1, **caractérisé en ce que** le pavé tactile est disposé sur la face arrière (13) d'un satellite (5) de commande sous volant.

3. Dispositif selon la revendication 2, **caractérisé en ce que** le pavé tactile (20) est disposé sensiblement derrière la jante (6) du volant (3).

4. Dispositif selon l'une quelconque des revendications 1 à 3, **caractérisé en ce que** la surface sensible apparente du pavé (20) comprend au moins une lumière allongée (21, 22).

5. Dispositif selon la revendication 4, **caractérisé en ce que** la surface sensible apparente comprend deux lumières (21, 22) formant une croix.

6. Dispositif, selon l'une quelconque des revendications 4 ou 5, **caractérisé en ce que** les bords d'au moins une lumière allongée (21) sont crénelés.

7. Dispositif selon l'une quelconque des revendications 1 à 6, **caractérisé en ce que** le pavé est un pavé tactile de pointage (20).
